(19) Europäisches Patentamt
European Patent Office
Office européen des brevets

(11) **EP 3 599 483 A1**

(12) **EUROPÄISCHE PATENTANMELDUNG**

(43) Veröffentlichungstag:
**29.01.2020  Patentblatt 2020/05**

(51) Int Cl.:
***G01S 13/82*** *(2006.01)*

(21) Anmeldenummer: **19187193.8**

(22) Anmeldetag: **19.07.2019**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(30) Priorität: **27.07.2018   DE 102018118192**

(71) Anmelder: **Hochschule Trier
54293 Trier (DE)**

(72) Erfinder: **Diewald, Andreas
54427 Kell am See (DE)**

(74) Vertreter: **Müller, Jochen
Müller & Aue
Patentanwälte
Schwester-Steimer-Weg 4
55411 Bingen (DE)**

(54) **RADARSYSTEM**

(57)    Ein Verfahren zum Lokalisieren eines Gegenstands mittels eines Radarsystems (10) umfassend eine Basisstation (12) und einen an dem Gegenstand angebrachten Transponder (14) mit den Schritten:
- Senden eines periodischen Ursignals (1) mit zeitlich variabler Frequenz durch die Basisstation (12),
- Empfangen des periodischen Ursignals (1) durch den Transponder (14),
- Modulieren des Ursignals (1) in dem Transponder (14),
sodass die Amplitude des Ursignals (1) mit einer festen Frequenz periodisch schwingt,
- Senden eines periodischen Ortungssignals (2) durch den Transponder (14),
- Empfangen des Ortungssignals (2) durch die Basisstation (12), und
- Auswerten des Ortungssignals (2) durch eine Analyse für periodische Signale, um den Gegenstand zu lokalisieren.

Fig. 1a

Fig. 1b

Fig. 1

**Beschreibung**

Die Erfindung bezieht sich auf ein Verfahren zum Lokalisieren eines Gegenstands mittels eines Radarsystems umfassend eine Basisstation und einen an dem Gegenstand angebrachten aktiven Transponder nach dem Oberbegriff des Anspruchs 1. Ferner betrifft die Erfindung einen Transponder für ein Radarsystem nach dem Oberbegriff des Anspruchs 16, eine Basisstation nach dem Oberbegriff des Anspruchs 19 und ein Radarsystem dazu.

Es sind Radarsysteme zum Messen einer Entfernung und einer Geschwindigkeit eines Objekts bekannt. Für die Messung wird an dem Objekt ein Transponder befestigt. Zum Messen der Entfernung und/oder der Geschwindigkeit wird ein Signal von einer Basisstation des Radarsystems an den Transponder gesendet. In dem Transponder wird das Signal frequenzmoduliert und nach der Modulation zurück zur Basisstation gesendet. Anhand einer Auswerteoperation können die Entfernung und die Geschwindigkeit des Objekts ausgewertet werden. Neben einer Frequenzmodulation ist auch eine Amplitudenmodulation bekannt.

Ein solches Radarsystem ist in der DE 199 46 168 A1 gezeigt. Dort wird ein Sekundärradar gelehrt, das einen Transponder umfasst, bei dem die Signale vor dem Zurücksenden an die Basisstation phasenverschoben werden. Insbesondere soll das gelehrte Radarsystem zur Abstandsbestimmung von Zügen herangezogen werden. Allerdings ist das mit dem Radarsystem durchgeführte Verfahren störungsempfindlich und nicht hinlänglich für eine saubere und präzise Abstand- und Geschwindigkeitsbestimmung. Es können beispielsweise keine großen Abstände, wie sie bei Brückenpfeilern beim Brückenbau auftreten, gemessen werden.

Ferner sind Radarsysteme bekannt, wie sie in der DE 100 54 180 B4 beschrieben sind. Diese Radarsysteme modulieren eine Information auf ein empfangenes Signal im Transponder. Für das Aufmodulieren der Informationen auf das gefangene Signal werden bestimmte Nutzsignale verwendet. Das sich dadurch ergebende Zwischensignal wird an eine Basisstation zurückgesendet und von dieser als Antwortsignal empfangen. Dieses Antwortsignal wird verglichen und ausgewertet, um eine Kanallänge mittels des Radarsystems zu bestimmen. Das Verwenden von Nutzsignalen kann zu uneindeutigen und aufwendigen Analyseverfahren der auszuwertenden Signale führen.

Im Weiteren ist aus der DE 102 61 098 A1 ein Verfahren bekannt, durch das ein Abstand zwischen einer Basisstation und einem mobilen Objekt bestimmt werden kann. Dazu wird ein mobiler Datenspeicher verwendet, der aufwendig bereitgestellt werden muss. Das auszubildende Signal in der Basisstation wird zeitsequenziell erhöht und erniedrigt. Aus den zeitsequenziell erhöhten und erniedrigten Signalen wird eine Differenz bestimmt, um den Abstand zwischen der Basisstation und dem jeweiligen Objekt zu ermitteln. Dieses Verfahren ist aufwendig und kostspielig.

In der DE 10 2005 059 507 A1 wird ein Verfahren für ein Radarsystem gelehrt, bei dem ein unmoduliertes Signal von einer Basisstation an einen Transponder gesendet wird. Dieses Signal wird vom Transponder phasenmoduliert und auf passive Weise zurück an die Basisstation gesendet. Ein solches Verfahren wird stark von rückstreuenden Objekten beeinflusst, sodass das zurückgesendete Signal ein hohes Rauschen aufweist. Außerdem ist die Reichweite passiver Messsysteme stark begrenzt.

Der Erfindung liegt die Aufgabe zugrunde, ein Verfahren, der eingangs genannten Art zu schaffen, mit dem ein Gegenstand mittels eines Radarsystems einfach und eindeutig lokalisiert werden kann. Ferner besteht eine weitere Aufgabe darin, eine Hardware für ein Radarsystem bereitzustellen, die solch ein Verfahren kostengünstig und/oder präzise ausführen kann.

Erfindungsgemäß wird die Aufgabe durch die Merkmale der unabhängigen Ansprüche gelöst.

Das erfindungsgemäße Verfahren zum Lokalisieren eines Gegenstands wird durch ein Radarsystem ausgeführt, dass eine Basisstation und einen an dem Gegenstand angebrachten aktiven Transponder umfasst. Das Verfahren umfasst die Schritte:

- Senden eines periodischen Ursignals mit zeitlich variabler Frequenz durch die Basisstation,
- Empfangen des periodischen Ursignals durch den Transponder,
- Modulieren des Ursignals in dem Transponder zur Erlangung eines Ortungssignals, sodass die Amplitude des Ursignals mit einer festen Amplitudenmodulationsfrequenz periodisch schwingt,
- Senden des periodischen Ortungssignals durch den Transponder,
- Empfangen des Ortungssignals durch die Basisstation, und
- Auswerten des Ortungssignals durch eine Analyse für periodische Signale, um den Gegenstand zu lokalisieren.

Durch das Aufmodulieren einer festen periodischen Frequenz auf die Amplitude des Ursignals, wird erreicht, dass das auszuwertende Ortungssignal außerhalb einer Frequenz der rückstreuenden Objekte liegt. So wird das Ortungssignal von einem Großteil des natürlichen Rauschens und eines Rauschens, welches durch passiv reflektierende Umgebungsflächen erzeugt wird, isoliert. Insbesondere kann eine Frequenz für das Aufmodulieren gewählt werden, die möglichst weit entfernt von der Frequenz des Rauschens liegt.

Ferner kann die Basisstation als Teil eines SISO-, AoA-, MiMO-, Digital-Beamforming- oder eines sonstigen bildgebenden Radarsystems sein. Ferner kann die Ausgangsbandbreite des Signals mehrere Megahertz betragen. Die Basisstation ist mit wenigstens einem Sender und einem Empfänger ausgestattet. Der Sender kann mittels eines VCO-Oszillators (Voltage Controlled Oscillator) das Ursignal erzeugen. Ebenso ist der Transponder mit wenigstens einem Sender und einem Empfänger ausgestattet.

Solch ein Verfahren ermöglicht es große Abstände, wie beim Bau von Gebäuden, zu messen. Beispielsweise können Brückenpfeiler während des Baus einer Brücke durch das Radarsystem und das Verfahren auf Bewegungen überwacht werden. Durch das Radarsystem können die Abstände und die Bewegungsrichtung der Brückenpfeiler präzise bestimmt werden, da ein Untergrundrauschen, welches durch die Reflexion der Umgebung der Brückenpfeiler entsteht, herausgefiltert werden kann. Solch ein Radarsystem kann ein Laserentfernungsmesssystem ersetzen, dass aufgrund der aktiven Transponder eine nahezu gleiche Leistungsfähigkeit aufweist. Die Unteransprüche stellen vorteilhafte Ausgestaltungen der Erfindung dar.

Vorteilhafterweise ist die Amplitude des Ursignals mittels eines hochreinen Sinus oder Kosinus im Transponder moduliert. Der hochreine Sinus oder Kosinus weist eine besonders feste Frequenz auf, sodass ein eindeutiges Signal erhalten wird. Dieses sehr reine Signal kann von dem Transponder moduliert werden, und wieder zurück an die Basisstation gesendet werden, wo es dann durch eine einfache elektronische Schaltung präzise analysiert werden kann.

Zweckmäßigerweise sendet die Basisstation das Ursignal mit einer Urfrequenz aus, die eine lineare zeitliche Abhängigkeit aufweist, wie es bei klassischen FMCW Radaren in der Radartechnik üblich ist. Alternativ kann die Urfrequenz des Ursignals auch andere zeitliche Abhängigkeiten, wie quadratische, kubische oder sonstige Abhängigkeiten, aufweisen. Ferner können anstelle einer Frequenzmodulation auch andere in der Telekommunikationstechnik gängige Modulationsarten (wie QPSK, OFDM, etc.) als Ursignal der Basisstation verwendet werden. Somit kann zusätzlich zur Entfernungsmessung auch eine Datenübertragung von der Basisstation zum Transponder ermöglicht werden. Durch die zeitliche Abhängigkeit verändert sich die Urfrequenz mit der Zeit. Beispielsweise kann eine Frequenzrampe abgefahren werden, sodass sich die Urfrequenz des Ursignals entsprechend der Rampensteigung bezüglich einer Frequenz-ZeitAbhängigkeit ändert. Da das Ursignal eine zeitlich abhängige Urfrequenz aufweist, kann auch das Ortungssignals eine zeitlich abhängige Frequenz aufweisen, die der Urfrequenz entspricht. Dadurch kann eine präzise Abstandsmessung erfolgen.

Es kann vorgesehen sein, dass die Modulation im Transponder durch einen ersten Mischer des Transponders erfolgt, der das Ursignal aufnimmt und mit einer hochfrequenten konstanten Amplitudenmodulationsfrequenz amplitudenmoduliert, um es an einen Sender des Transponders auszugeben. Solch ein Transponder weist wenigstens einen ersten Mischer auf, der einen Eingang für ein durch den Transponder empfangenes Ursignal beinhaltet. Dieses empfangene Ursignal weist eine Laufzeitverzögerung auf, die durch die Strecke zwischen der Basisstation und dem Transponder bedingt ist. Näherungsweise wird die Laufzeitverzögerung bei der zeitabhängigen Urfrequenz des Ursignals außer Acht gelassen, da die Änderung der zeitabhängigen Frequenz sehr langsam ist bzw. als stufenweise aufgefasst wird. Dieses so empfangene Ursignal wird in den ersten Mischer im Transponder eingeleitet, der das Ursignal mit einer hochfrequenten und konstanten Amplitudenmodulationsfrequenz amplitudenmoduliert, wobei diese Amplitudenmodulationsfrequenz insbesondere hoch rein und stabil ist. Das Ursignal wird dabei amplitudenmoduliert. Dadurch wird ein über weite Entfernungen reichendes und präzise auswertbares Signal geschaffen.

Eine Alternative beinhaltet, dass die konstante Amplitudenmodulationsfrequenz für das amplitudenmodulieren des Ursignals gleichzeitig oder mit einzelnen unterschiedlichen konstanten Amplitudenmodulationsfrequenzen schwingen kann. Es können also gleichzeitig mehrere hoch reine Frequenzen auf die Amplitude aufmoduliert werden oder nacheinander unterschiedliche feste hochreine Frequenzen für die Amplitudenmodulation vorgesehen werden. Dadurch kann ein Radarsystem mit einer Mehrzahl von Transpondern verwendet werden, die auf unterschiedlichen Amplitudenmodulationsfrequenzen senden. Die Amplitudenfrequenzen der Transponder können entsprechend auf jeweils eine Amplitudenmodulationsfrequenz eingestellt werden. Die Einstellung der Amplitudenmodulationsfrequenzen kann auch automatisch erfolgen, indem jeder Transponder eine freie Amplitudenmodulationsfrequenz sucht.

Um eine noch präzisere Auswertung des Ortungssignals zu ermöglichen, kann im Transponder ein zweiter Mischer vor den ersten Mischer vorgeschaltet werden. Der zweite Mischer im Transponder nimmt das Ursignal bei dieser Ausführungsform als erstes auf, wo es mit einer Stabilisationsfrequenz des Signals moduliert wird und anschließend ein mit der Stabilisationsfrequenz moduliertes Signal an den ersten Mischer weiterleitet. Der erste Mischer kann das Signal nun entweder an die Basisstation zurücksenden oder an einen weiteren Mischer des Transponders weiterleiten.

Ferner kann ein dritter Mischer des Transponders nach dem ersten Mischer geschaltet werden, wobei der dritte Mischer das Signal vom ersten Mischer aufnimmt und mit der Stabilisationsfrequenz ein weiteres Mal moduliert. Der dritte Mischer gibt ein Signal an den Sender des Transponders aus. Das Signal wird durch den dritten Mischer im Transponder ein zweites Mal moduliert. Insgesamt wird das Signal bei dieser Ausführungsform zweimal mit der gleichen Stabilisationsfrequenz moduliert. Dadurch wird eine hohe Güte der Trägerfrequenz erreicht, sodass das zurückgesendete Ortungssignal präzise bestimmt werden kann.

In einer bevorzugten Ausführungsform kann vorgesehen sein, dass die Stabilisationsfrequenz ungefähr der Urfrequenz des Ursignals entspricht, wobei die Stabilisationsfrequenz im Mikrowellenbereich oder im Radiowellenbereich oder im Radarwellenbereich oder im Meterwellenbereich oder im Zentimeterwellenbereich liegt. Das Aufmischen der Stabilisationsfrequenz, die der ursprünglichen Urfrequenz des Ursignals ungefähr entspricht, gewährleistet eine sichere Bestimmung des Abstandes, da keine Uneindeutigkeiten durch Artefakte oder durch Rauschen in dem Ortungssignal enthalten sind.

Vorzugsweise werden in der Basisstation schnellabtastende Analog-Digital-Wandler eingesetzt, um das Ortungssignal zu analysieren. Die elektronische Schaltung der Basisstation mit schnellabtastenden Analog-Digital-Wandlern ist einfach aufgebaut.

Ergänzend kann vorgesehen sein, dass das Ortungssignal in der Basisstation gefiltert wird, insbesondere hochpassgefiltert oder bandpassgefiltert oder tiefpassgefiltert wird. Die Filterung ermöglicht es die für die Abstands- und Geschwindigkeitsbestimmung notwendige Frequenz zu isolieren. Bei einer zeitabhängigen Frequenz kann die Filterung zeitabhängig filtern oder ein bestimmtes Frequenzband herausfiltern.

Alternativ oder ergänzend zu den schnellabtastenden analog-Digital-Wandlern kann das gefilterte Ortungssignal mit langsam abtastenden Analog-Digital-Wandlern analysiert werden, wodurch insbesondere die Datenrate reduziert wird. Die bloße Verwendung von langsam abtastenden Analog-Digital-Wandlern führt zu einer drastisch vereinfachten und kostengünstigen elektronischen Schaltung für die Basisstation. Ferner muss nur eine geringe Datenmenge verarbeitet werden und gegebenenfalls weitergeleitet werden. Eine verringerte Datenrate kann vorteilhaft in Verbindung mit einer so genannten Smartphone-App und/oder einer drahtlosen Übertragung und/oder einer sonstigen Computerapplikation verwendet werden.

Das durch die Basisstation empfangene Ortungssignal kann mit einer Frequenz, die geringer ist als die konstante Amplitudenmodulationsfrequenz der Amplitudenmodulation, in einem zweiten Mischer in der Basisstation gemischt werden. Dadurch wird das Ortungssignal besonders vorteilhaft für das langsame Abtasten mittels Analog-Digital-Wandlern vorbereitet.

Ferner kann das Ortungssignal zur Auswertung in einem Basisbandsignal selbstgemischt werden. Insbesondere bei der Verwendung von mehreren Transpondern, die mit unterschiedlichen Frequenzen die Amplitudenmodulation ausführen, können durch die Selbstmischung die Transponder sehr einfach voneinander getrennt bestimmt werden, und jedem Transponder ein bestimmter Abstand zur Basisstation zugeordnet werden. Darüber hinaus erreicht man durch die Selbstmischung ungefähr ein doppeltes Auflösungsvermögen bezüglich der Entfernung, da die Entfernungsachse um den Faktor 2 gegenüber klassischen Radarverfahren gestreckt ist.

In der Basisstation kann in einer weiteren Ausführungsform das Ortungssignal nach dem Empfangen durch einen ersten Mischer in der Basisstation mit einer der Urfrequenz des Ursignals entsprechenden Frequenz oder mit einer niedrigeren Frequenz gemischt werden, um eine bessere Signalverarbeitung zu erreichen.

Ferner ist es möglich, dass der Transponder des Radarsystems zum Ausführen des Verfahrens einen Sender und einen Empfänger für die gesendeten Signale sowie einen Verstärker umfasst. Ein erster Mischer in dem Transponder mischt die Amplitudenmodulationsfrequenz mittels einer Signalquelle auf das empfangene Ursignal auf, wodurch eine sichere Amplitudenmodulation erreicht wird.

Eine vorteilhafte Weiterbildung beinhaltet, dass ein zweiter Mischer und vorzugsweise ein dritter Mischer im Transponder verschaltet sind, die auf das Ursignal die Stabilisationsfrequenz mittels einer weiteren Signalquelle aufmodulieren. Dadurch wird das auszusendende Ortungssignal sehr stabil und einfach in der Basisstation auswertbar.

Die Basisstation des Radarsystems zum Ausführen des Verfahrens umfasst einen Sender und einen Empfänger sowie eine Signalquelle für ein Ursignal, wobei der erste Mischer in der Basisstation das empfangene Ortungssignal mit einer Urfrequenz der Signalquelle des Ursignals mischt, und anschließend ein Filter das gemischte Signal filtert und an einen Ausgang ausgibt. Der Ausgang kann mit einem Computer verbunden sein, der das Signal abtastet.

Bei einer weiteren Ausführungsform der Basisstation mischt der zweite Mischer in der Basisstation das gefilterte Signal mit einer weiteren Frequenz und gibt erst anschließend das Signal an den Ausgang zu Auswertung. Dadurch kann die Abtastrate verringert werde.

Es versteht sich, dass die vorstehend genannten und nachstehend noch zu erläuternden Merkmale nicht nur in der jeweils angegebenen Kombination, sondern auch in anderen Kombinationen verwendbar sind. Der Rahmen der Erfindung ist nur durch die Ansprüche definiert.

Die Erfindung wird im Folgenden anhand zweier Ausführungsbeispiele unter Bezugnahme auf die zugehörigen Zeichnungen näher erläutert.

Es zeigt:

Fig. 1a     ein herkömmliches Lasermessgerät zum Bestimmen einer Entfernung eines Gegenstandes,

Fig. 1b     ein erfindungsgemäßes Radarsystem zum Bestimmen einer Entfernung eines Gegenstandes,

Fig. 2     eine erfindungsgemäße Ausführungsform eines Radarsystems mit Amplitudenverstärker jedoch ohne Mischung des modulierten Signals mit einer Frequenz,

Fig. 3    eine Frequenzanalyse des amplitudenverstärkten Ortungssignals zuzüglich dem von anderen Objekten passiv rückgestreuten Signals,

Fig. 4    eine erfindungsgemäße Ausführungsform eines Radarsystems mit Amplitudenmodulation,

Fig. 5    eine Frequenzanalyse des amplitudenmodulierten Ortungssignals zuzüglich des von anderen Objekten passiv rückgestreuten Signals,

Fig. 6    eine Frequenzanalyse des amplitudenmodulierten Ortungssignals mit anschließender zweiter Mischung in der Basisstation,

Fig. 7    eine Frequenzanalyse des amplitudenmodulierten Ortungssignals mit anschließender Selbstmischung und

Fig. 8    eine alternative Ausführungsform des Transponders.

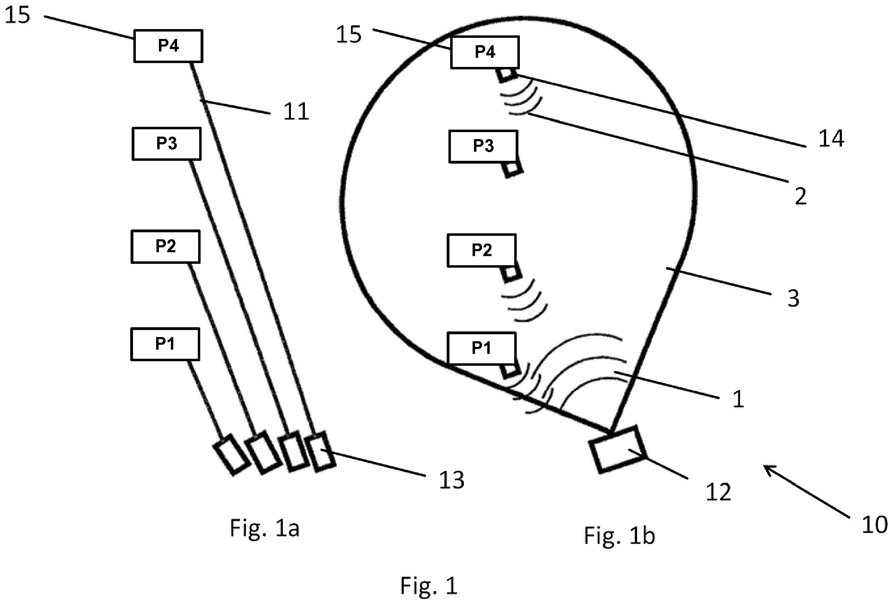

Fig. 1a zeigt ein herkömmliches Lasermessgerät 13 als Entfernungsmesssystem. Mittels eines Laserstrahls 11 kann die Entfernung eines Gegenstands 15 von dem Lasermessgerät 13 anhand der Reflexion des Laserstrahls 11 an dem Gegenstand 15 bestimmt werden. Im Wesentlichen ist dieses Messsystem ein passives Messsystem, welches einer Vielzahl von Störquellen durch ungewollte Reflexionen an benachbarten Gegenständen unterliegt, sodass ein stetiges störendes Rauschen in den Messsignalen enthalten ist. Ferner muss für jeden Gegenstand 15 ein separates Lasermessgerät 13 vorgesehen werden.

In Fig. 1b ist das erfindungsgemäße Radarsystem 10 dargestellt, mittels dem die Entfernung an dem Gegenstand 15 bestimmt werden kann. Das Radarsystem 10 umfasst eine Basisstation 12 und an den Gegenständen 15 angebrachte Transponder 14. Die Basisstation 12 sendet ein Ursignal 1 aus, welches von den Transpondern 14 empfangen wird und in den Transpondern 14 aktiv moduliert wird, um anschließend zur Basisstation 12 zurückgesandt zu werden. Für die Mehrzahl der Gegenstände 15 ist lediglich eine Basisstation 12 notwendig, sodass in dem Abdeckungsbereich 3 der einen Basisstation 12 sämtliche Transponder 14 mit den entsprechenden Gegenständen 15 umfasst sein können. Die Transponder 14 senden dabei unterschiedlich modulierte Ortungssignale 2 aus, wobei die Basisstation 12 die unterschiedlichen Transponder 14 voneinander unterscheiden kann. Erfindungsgemäß wird das Ortungssignal 2 amplitudenmoduliert. Die Modulation erfolgt für jeden Transponder 14 mit einer hochreinen eigenen Amplitudenmodulationsfrequenz. Die Amplitudenmodulationsfrequenz kann ein Sinus oder ein Kosinus sein. Die Urfrequenz des Ursignals kann in einem Frequenzband von 24 GHz ISM ausgeführt werden. Da das erfindungsgemäße Radarsystem 10 aktive Transponder hat, ist es nicht nur auf 150 m begrenzt, wie es bei herkömmlichen passiven Radarsystemen der Fall ist.

Insbesondere kann das Radarsystem 10 beim Bau von Brücken vorteilhaft eingesetzt werden. Beispielsweise können so Brückenpfeiler, die mehrere Kilometer voneinander entfernt sind, durch das erfindungsgemäße Radarsystem 10 hinsichtlich Entfernung und Bewegungen überwacht werden. Solche verteilten Geometrien können hervorragend auf Schwingungen und Bewegungsrichtungen analysiert werden.

Das Radarsystem 10 kann ein Ursignal 1 aussenden, welches eine linear frequenzmodulierte Welle aufweist. Ferner ist das Radarsystem 10 als SISO-, AoA-, Digital-Beamforming-, MIMO- oder ein sonstiges bildgebendes Radarsystem ausgeführt. Die Ausgangsbandbreite des Radarsystems 10 kann mehrere Megahertz betragen.

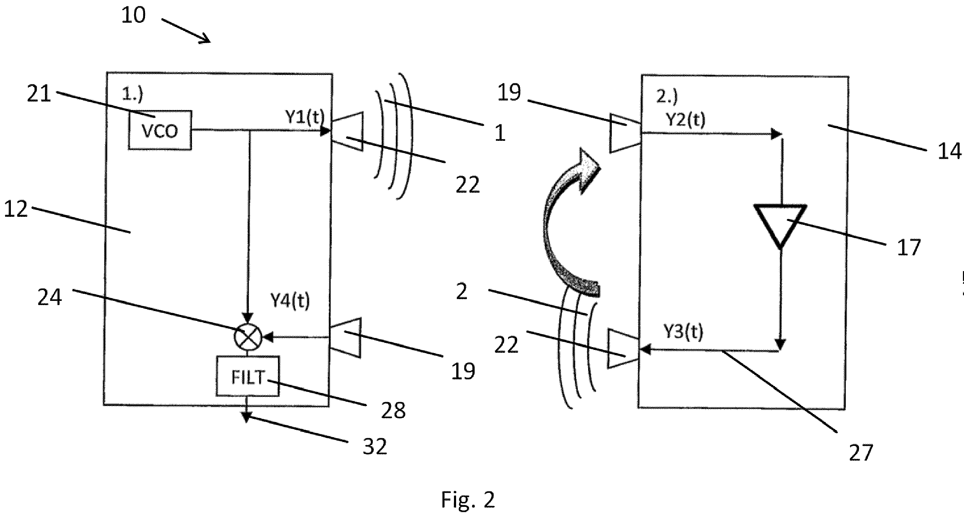

Fig. 2 zeigt ein sehr einfaches Radarsystem 10, bei dem der Transponder 14 das Ursignal 1 lediglich mittels eines Verstärkers 17 verstärkt. Die Basisstation 12 umfasst eine Signalquelle 21 für das Ursignal 1. Die Signalquelle 21 ist ein VCO-Oszillator (Voltage Controlled Oscillator), die ein Signal mit einer Urfrequenz $f_{uW}$ erzeugt. Das Ursignal 1 wird mittels eines Senders 22 in Richtung des Transponders 14 gesendet. Der Transponder 14 empfängt das Ursignal 1 mit einem Empfänger 19. Im Transponder 14 wird das Ursignal 1 durch den Verstärker 17 verstärkt und an einen Sender 22 des Transponders 14 weitergeleitet, der das so erzeugte Ortungssignal 2 an einen Empfänger 19 der Basisstation 12 zurücksendet. Die Basisstation 12 empfängt das Ortungssignal 2 und wertet dieses aus. Dazu wird das Ortungssignal 2 an einen ersten Mischer 24 weitergeleitet, wo es mit der Urfrequenz $f_{uW}$ der Signalquelle 21 des Ursignals 1 gemischt und an einen Filter 28 weitergeleitet wird. Der Filter 28 kann ein Hochpassfilter oder ein Bandpassfilter oder ein Tiefpassfilter sein, der das Ortungssignal 2 aus einem mit Rauschen überlagerten Signal am Empfänger 19 der Basisstation 12 herausfiltert. Nach dem Filtern wird das gefilterte Signal an einen Ausgang 32 der Basisstation 12 zur Auswertung geleitet, wo es beispielsweise mittels eines Computers auf Bewegungen, Entfernungen, Schwingungen und Bewegungsrichtungen der Gegenstände 15 sind analysiert werden kann.

Das Ursignal 1 kann wie folgt berechnet werden, wenn die zeitliche Abhängigkeit der Urfrequenz allgemein ist, wobei y1(t) das Ursignal, A die Amplitude, ω die Frequenz und t bzw. t' die Zeit ist. Diese Berechnungsformel gilt auch für zeitlich abhängige Frequenzen ω(t), die nicht linear sind.

$$y_1(t) = A \cdot \cos\left(\int_\infty^t \omega(t') \cdot \mathrm{d}t'\right)$$

Bei langsamen Frequenzvariationen verglichen mit der Periodendauer des Ursignals 1 kann das ausgesendete Ursignal 1 auch näherungsweise folgendem Zusammenhang unterliegen, wobei ein linearer Zusammenhang zwischen der zeitabhängigen Urfrequenz $\omega(t)$ und der Zeit t vorliegt. Ferner ist eine Phasenverschiebung $\varphi_0$ enthalten, die auch durch die Integration der allgemeinen Formel für y1(t) zustande kommt.

$$y_1(t) = A \cdot \cos\left(\omega(t) \cdot t + \varphi_0\right)$$

Das von dem Sender 22 der Basisstation 12 ausgesendete Ursignal 1, welches einer Wellenfunktion y1(t) folgt, wird von dem Empfänger 19 des Transponders 14 empfangen und beinhaltet eine Laufzeitverzögerung $T_{of}$ der einfachen Strecke zwischen dem Transponder 14 und der Basisstation 12. Dabei empfängt der Empfänger 19 des Transponders 14 eine Wellenfunktion y2(t) mit einer abgeschwächten Amplitude B, welche wie folgt beschrieben werden kann.

$$y_2(t) = B \cdot \cos(\omega(t) \cdot (t - T_{oF}) + \varphi_0)$$

Da die Änderung der zeitabhängigen Urfrequenz $\omega(t)$ als sehr langsam bzw. stufenweise aufgefasst werden kann, wird das Argument von w(t) näherungsweise in der Zeit nicht durch die Laufzeitverzögerung $T_{oF}$ verschoben. Das Argument bleibt einfach t.

Der Transponder 14 der Ausführungsform gemäß Fig. 2 verstärkt lediglich das empfangene Signal mit der Wellenfunktion y2(t) und sendet ein Ortungssignal 2 mit einer veränderten Amplitude aus, die nach einer erneuten Laufzeitverzögerung $T_{of}$ und einer Dämpfung der Amplitude durch den Empfänger 19 der Basisstation 12 mit der Wellenfunktion y4(t) empfangen wird, welche eine Amplitude D und eine doppelte Laufzeitverzögerung $T_{of}$ aufweist. Ebenso kann das Argument von $\omega(t)$ als näherungsweise in der Zeit durch die Laufzeitverzögerung unverschoben angesehen werden.

$$y_4(t) = D \cdot \cos(\omega(t) \cdot (t - 2 \cdot T_{oF}) + \varphi_0)$$

In der Basisstation 12 wird das empfangene Ortungssignal 2 mit dem Ursignal 1 durch den ersten Mischer 24 multipliziert. Die Multiplikation begibt sich anhand von trigonometrischen Theorems zu folgender Wellenfunktion.

$$y_1(t) \cdot y_4(t) = \frac{A \cdot D}{2} \cdot [\cos(2\omega(t) \cdot T_{oF}) + \cos(2 \cdot \omega(t) \cdot (t - T_{oF}) + 2\varphi_0)]$$

Anschließend wird durch eine Tiefpassfilterung der rechte Term herausgefiltert, sodass an den Ausgang 32 zur Auswertung eine gefilterte Funktion ausgegeben wird. Die folgende Funktion ist besonders einfach zu analysieren, da unnötige Signalanteile und das Rauschen herausgefiltert sind.

$$\mathrm{filt}(y_1(t) \cdot y_4(t)) = \frac{A \cdot D}{2} \cdot \cos(2\omega(t) \cdot T_{oF})$$

Durch die gleichbleibende Laufzeitverzögerung $T_{oF}$ schwingen die Wellenfunktionen wegen der zeitabhängige Frequenzvariation der Urfrequenz $\omega(t)$ harmonisch. Bei verschiedenen Entfernungen des Transponders 14 von der Basisstation 12 oszilliert das Signal mit unterschiedlicher Geschwindigkeit bei einer linearen Variation der Urfrequenz ω(t). Auch kann ein FMCW-Radarsystem sprunghafte Frequenzänderungen verarbeiten. Bei einer Überlagerung von mehreren Gegenständen 15 mit Transpondern 14 werden die linearen und die sonstigen Anteile der Signale durch eine Fouriertransformation voneinander getrennt, sodass eine Auswertung der Entfernung und der Geschwindigkeit der einzelnen Gegenstände ermöglicht wird.

Nimmt man eine lineare Änderung der Urfrequenz ω(t) an, erhält man eine zeitlich lineare Beziehung, wobei $\Delta\omega$ eine Änderung der Frequenz und $\Delta T$ eine Änderung der Zeit darstellt.

$$\omega(t) = \frac{\Delta\omega}{\Delta T} \cdot t$$

Dadurch kann die Wellenfunktion y1(t) des Ursignals 1 vereinfacht werden. Es folgt nach einer Integration der linearen Beziehung

$$y_1(t) = A \cdot \cos\left(\int_{\infty}^{t} \omega(t') \cdot \mathrm{d}t'\right) = A \cdot \cos\left(\frac{\Delta\omega}{2\Delta T} \cdot t^2\right).$$

Ferner ergibt sich für die Wellenfunktion y4(t) des durch die Basisstation 12 empfangenen Ortungssignals 2 folgenden Beziehung.

$$y_4(t) = D\cdot\cos\left(\frac{\Delta\omega}{2\Delta T} \cdot (t - 2T_{oF})^2\right) = D\cdot\cos\left(\frac{\Delta\omega}{2\Delta T} \cdot (t^2 - 4T_{oF} \cdot t + 4T_{oF}^2)\right)$$

Die vereinfachten Wellenfunktionen y1 und y4 werden wieder miteinander multipliziert und anschließend gefiltert, wobei sich entsprechend obiger Erläuterung des Filterungsvorgangs folgende Beziehung ergibt.

$$\mathrm{filt}(y_1(t) \cdot y_4(t)) = \frac{A \cdot D}{2} \cdot \cos\left(2\underbrace{\frac{\Delta\omega}{\Delta T}}_{\omega(t)} \cdot t \cdot T_{oF} - 2\frac{\Delta\omega}{\Delta T} \cdot T_{oF}^2\right)$$

Der erste Term im Argument der Kosinusfunktion bildet den Zusammenhang der schrittweisen FMCW-Methode ab. Ergänzend zum Term der schrittweisen FMCW-Methode stellt der zweite Term die entfernungsabhängige Phasenverschiebung der, die bei unveränderlicher Entfernung trotz der linearen Zeitabhängigkeit der Urfrequenz stationär bleibt. Dies ist der Fall bei einem stillstehenden Gegenstand 15.

Ist der Gegenstand 15 jedoch in Bewegung und weist eine Geschwindigkeit, eine Beschleunigung oder eine Schwingungsbewegung auf, dann ist die Laufzeitverzögerung $T_{of}$ nicht mehr stationär, sondern folgt ebenfalls einer zeitlichen Abhängigkeit. Im einfachsten Fall kann diese wie folgend linear sein, wobei v eine konstante Geschwindigkeit und $c_0$ die Lichtgeschwindigkeit ist.

$$T_{oF} = \frac{v \cdot t}{c_0}$$

Für einen bewegten Gegenstand 15 ergibt sich die gefilterte Multiplikation der Wellenfunktionen, welche an den Ausgang 32 zur Auswertung gegeben wird, zu

$$\text{filt}(y_1(t) \cdot y_4(t)) = \frac{A \cdot D}{2} \cdot \cos\left(2\frac{\Delta\omega}{\Delta T} \cdot \frac{v}{c_0} \cdot t^2 \cdot \left(1 - \frac{v}{c_0}\right)\right)$$

.

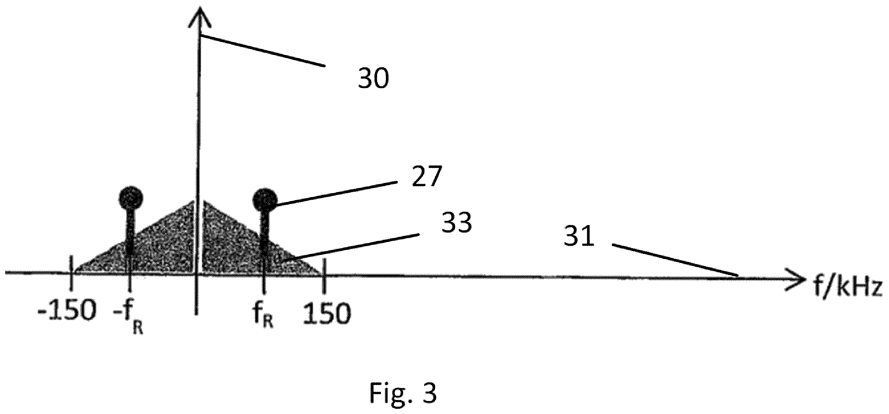

In Fig. 3 ist eine Frequenzanalyse des multiplizierten Signals gezeigt, die durch das Radarsystem 10 der Ausführungsform der Fig. 2 erreicht wird. Die vertikale Achse 30 gibt die Amplitudenstärke und die horizontale Achse 31 die Höhe der Frequenz in Hertz an. Das Radarsystem 10 der Fig. 2 erzeugt keine Amplitudenmodulation mit einer erfindungsgemäßen hochreinen periodischen Funktion.

Wird nun das Radarsystem in einem 24-GHz-ISM-Frequenzband betrieben, dann kann die lineare Variation der Urfrequenz $\omega(t)$ bei einer Bandbreite von 250 MHz erfolgen. Die daraus resultierende Auflösung ergibt sich aus folgender Beziehung, wobei $\Delta R$ das Auflösungsraster in einer Raumrichtung und $\Delta f$ eine Änderung einer Frequenz ist.

$$\Delta R = \frac{c_0}{2\Delta f}$$

Die Zahl der Oszillationen während des Abfahrens der Frequenzrampe mit $\omega(t)$ bei einem 24-GHz-ISM-Frequenzband folgt folgender Relation, wobei $N_R$ Zahl der Oszillationen und R einen Abstand angibt.

$$N_R = \frac{R}{\Delta R}$$

Beispielsweise liegen bei Gegenständen mit 1,8 km Entfernung von der Basisstation 12 bis zu 3000 Oszillationen pro Frequenzrampe vor. Bei einer ausreichend hohen Rampenwiederholfrequenz, die beispielsweise 50 Hz betragen kann, um Bewegungen der Gegenstände 15 anhand des Dopplereffekts sauber auflösen zu können, lässt sich eine maximale Frequenz von 150 kHz für passive strahlende Flächen der Gegenstände berechnen. Passive strahlende Flächen sind Flächen der Gegenstände und derer Umgebung, die die Radarsignale zurückstrahlen und neben dem aktiv durch den Transponder 14 zurückgestrahlten Ortungssignal 2 an der Basisstation 12 ankommen. Diese passiv zurückgestrahlten Signale 33 sind in Figur 3 als dreieckige Fläche dargestellt, da diese passiven Rückstrahler näherungsweise homogen verteilt sind, erzeugen sie ein kontinuierliches Spektrum von 0 Hz bis 150 Hz, wobei die Amplitude dieses Signals 33 abnimmt.

Ist nun, gemäß der Ausführungsform der Fig. 2, das Ortungssignal 2 nicht mit einer Amplitudenmodulation und einer hochreinen Frequenz moduliert, sondern ist lediglich die Amplitude verstärkt, ergibt sich, wie in der Frequenzanalyse der Figur 3 dargestellt, ein doppeltes rückgesendetes peakartiges Signal 27 mit diskreten entfernungsabhängigen Frequenzen $f_R$, welches in dem passiv zurückgestrahlten Signal 33 liegt. Dies führt zu einer Überlagerung der Signale 27, 33 und damit zu einer erschwerten Auswertung der Entfernung. Insbesondere kann mit steigendem Abstand die Amplitude der diskreten Frequenz $f_R$ unter die Amplitude des rückgestreuten Signals 33 fallen. Solch ein nachteiliger Effekt tritt zum Beispiel bei mehrfach reflektierenden Umgebungen wie Kanälen auf, da dort die Kanalwände aufgrund der hohen Rauigkeit ständig reflektieren. Dies kann besonders hinderlich sein, möchte man einen Kanalroboter mit einem Radarsystem erkennen.

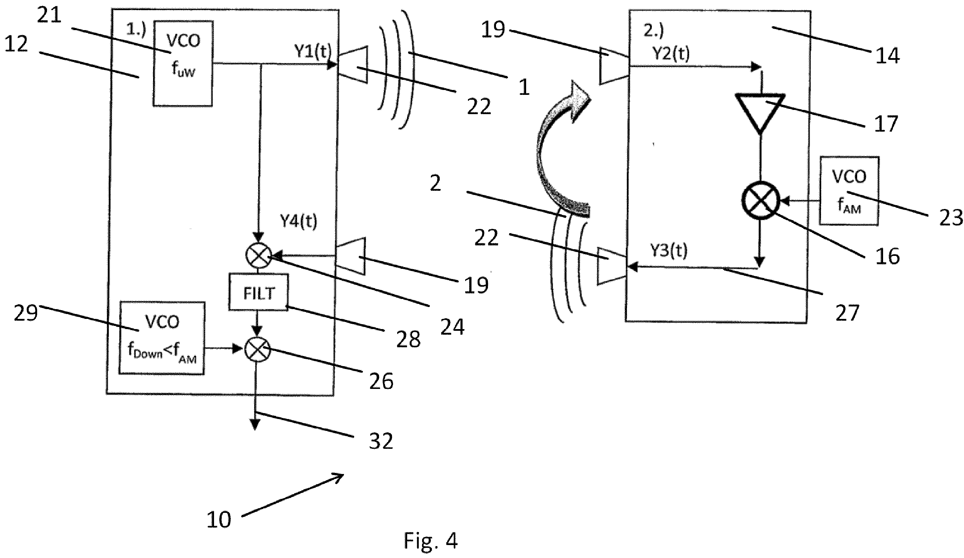

Eine weitere Ausführungsform des Radarsystems 10 ist in Fig. 4 dargestellt. Grundsätzlich wird bei dieser Ausführungsform das Ursignal 1 ebenfalls von einem Sender 22 der Basisstation 12 an einen Empfänger 19 des Transponders 14 gesendet bzw. das Ortungssignal 2 zurückgesendet. In dem Transponder 14 ist nach dem Verstärker 17 ein erster Mischer 16 geschaltet, durch den die Wellenfunktion y2(t) mittels einer Signalquelle 23 amplitudenmoduliert wird. Die Signalquelle 23 prägt eine Frequenz $f_{AM}$ auf die Amplitude der Wellenfunktion y2(t) auf, woraus sich eine zur Ausführungsform der Figur 2 veränderte Wellenfunktion y3(t) ergibt. Die neue Wellenfunktion y3(t) folgt der Beziehung

$$y_3(t) = k \cdot B \cdot \cos(\omega(t) \cdot (t - T_{oF}) + \varphi_0) \cdot \cos(\omega_{AM} \cdot t + \varphi_{AM})$$

Dabei ist k ein Faktor mit dem die neue Amplitude B erhöht oder abgesenkt wird. Ferner ist $\omega_{AM}$ die Frequenz

der Amplitudenmodulation, mit der die Amplitude schwingt, und $\varphi_{AM}$ die Phasenverschiebung der Amplitudenmodulation. Diese Amplitudenmodulationsfrequenz $f_{AM}$ als auch der Faktor k für die Amplitudenmodulation kann für unterschiedliche Gegenstände 15 mit unterschiedlichen Transpondern 14 unterschiedlich groß sein.

Der Empfänger 19 der Basisstation 12 empfängt eine Wellenfunktion y4(t)

$$y_4(t) = D \cdot \cos(\omega(t) \cdot (t - 2 \cdot T_{oF}) + \varphi_0) \cdot \cos(\omega_{AM} \cdot (t - T_{oF}) + \varphi_{AM})$$

die entsprechend der Amplitudenmodulation verändert ist. Die Wellenfunktion y4(t) wird wie bei der Ausführungsform der Figur 2 durch den ersten Mischer 24 mit dem Ursignal 1 vermischt und anschließend durch den Filter 28 gefiltert. Das Signal, welches durch das Mischen entsteht, ist ein Produkt zweier harmonischer Funktionen und weist folgende Gestalt auf.

$$\text{filt}(y_1(t) \cdot y_4(t)) = \frac{A \cdot D}{2} \cdot \cos[2\omega(t) \cdot T_{oF}] \cdot \cos[\omega_{AM} \cdot (t - T_{oF}) + \varphi_{AM}]$$

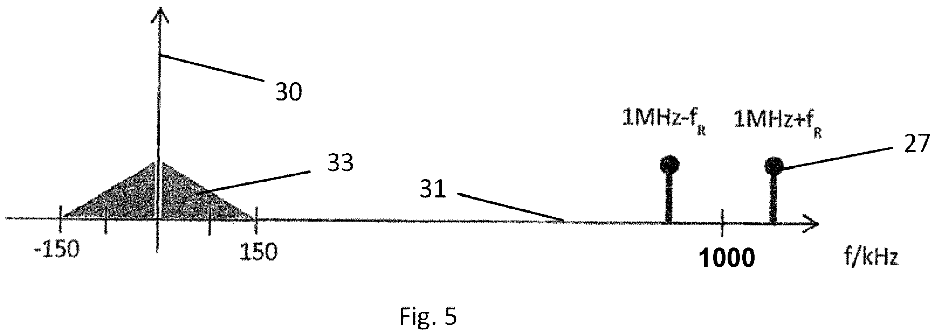

Die Frequenzanalyse des empfangenen Ortungssignals 2 ist in Figur 5 dargestellt. Die beiden peakartigen zurückgesendeten doppelten Signale 27 sind um die Amplitudenmodulationsfrequenz $f_{AM}$ aus dem passiven Signal 33 entlang der Frequenzachse 31 herausgeschoben und weisen einen Frequenzanteil auf, der eine entfernungsabhängige Frequenz $f_R$ beinhaltet, der zum einen von der Amplitudenmodulationsfrequenz $f_{AM}$ subtrahiert und zum anderen addiert wird, sodass zwei Signalpeaks 27 um die Amplitudenmodulationsfrequenz $f_{AM}$ herum entstehen. Dadurch sind die Amplituden der Signale 27 auch bei sehr großen Entfernungen nicht durch die Amplitude des Rauschens des Signals 33 überlagert.

Nachfolgend kann zur Signalverarbeitung, wie in Fig. 4 dargestellt, in einem zweiten Mischer 26 in der Basisstation 12 ein Signal aus einer Signalquelle 29 für eine Abtastung auf das gefilterte Signal aufmoduliert werden. Das so aufmodulierte Signal weist eine Frequenz $f_{down}$ auf, die geringer ist als die Modulationsfrequenz $f_{AM}$. Dadurch kann ein Abtasten des Signals nachdem es zum Ausgang 32 gesendet wurde vereinfacht werden, weil mittels langsamer Analog-Digital-Wandler die Datenrate verringert werden kann.

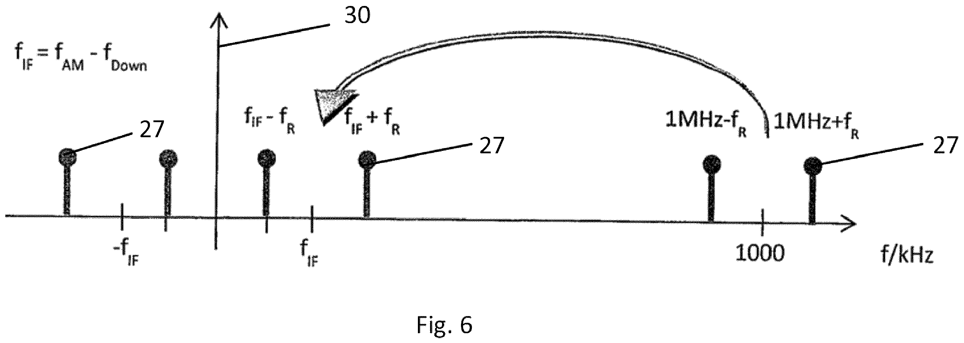

Solch eine Frequenzanalyse der Signalverarbeitung ist in Fig. 6 dargestellt, in das Mischen der Wellenfunktion y4(t) mit dem zweiten Mischer 26 und dem Aufprägen der Frequenz $f_{down}$ gezeigt ist. Dabei werden die Signale 27 wieder zurück in einen Bereich mit niedriger Frequenz gezogen, wobei sich die Signale 27 um die Ausgangsfrequenz des zweiten Mischers 26 in der Basisstation 12 durch die entfernungsabhängige Frequenz $f_R$ herum doppeln.

Alternativ kann zur Signalverarbeitung auf den zweiten Mischer 26 und die Signalquelle 29 verzichtet werden, wobei das zum Ausgang 32 gesendete Signal dann mittels schneller Analog-Digital-Wandler analysiert werden muss.

Eine dritte Alternative für eine nachfolgende Behandlung zur Signalverarbeitung des gefilterten Signals beinhaltet lediglich die Verwendung langsamer Analog-Digital-Wandlern jedoch ohne das Mischen mit einer langsamen Frequenz $f_{down}$ durch eine Signalquelle 29.

Eine vierte Alternative zur nachfolgenden Signalverarbeitung des gefilterten Signals beinhaltet eine Selbstmischung des Signals in einem Basisbandsignal und ein Sampling des Signals mit sehr niedriger Abtastraten. Dabei wird zuerst nur das relevante Frequenzband um $f_{AM}$ bandpassgefiltert. Insbesondere werden dadurch Frequenzen im niedrigeren Frequenzbereich aber auch höhere Frequenzen herausgefiltert. Die Selbstmischung führt zu folgendem Ausdruck, wobei der Ausdruck von links nach rechts gelesen einen Gleichanteil, die reinen Entfernungsinformationen im Argument einer harmonischen Funktion mit der Frequenz $2f_R$ jedoch mit dem Faktor 2 verglichen zur klassischen Radargleichung, die doppelte Amplitudenmodulationsfrequenz $f_{AM}$ und zwei diskrete Signalpeaks 27 zur doppelten Amplitudenmodulationsfrequenz $f_{AM}$ aufgrund der Amplitudenmodulation mit dem Ortungssignal 2 enthält.

$$\begin{aligned}
[\text{filt}(y_1(t) \cdot y_4(t))]^2 &= \left( \frac{A \cdot D}{2} \cdot \cos[2\omega(t) \cdot T_{oF}] \cdot \cos[\omega_{AM} \cdot (t - T_{oF}) + \varphi_{AM}] \right)^2 \\
&= \frac{(A \cdot D)^2}{4} \cdot (\cos[2\omega(t) \cdot T_{oF}])^2 \cdot (\cos[\omega_{AM} \cdot (t - T_{oF}) + \varphi_{AM}])^2 \\
&= \frac{(A \cdot D)^2}{8} \cdot (1 + \cos[4\omega(t) \cdot T_{oF}]) \cdot (1 + \cos[2 \cdot \omega_{AM} \cdot (t - T_{oF}) + \varphi_{AM}]) \\
&= \frac{(A \cdot D)^2}{8} \cdot (1 + \cos[4\omega(t) \cdot T_{oF}] + \cos[2 \cdot \omega_{AM} \cdot (t - T_{oF}) + \varphi_{AM}] + \cos[4\omega(t) \cdot T_{oF}] \cdot \cos[2 \cdot \omega_{AM} \cdot (t - T_{oF}) + \varphi_{AM}])
\end{aligned}$$

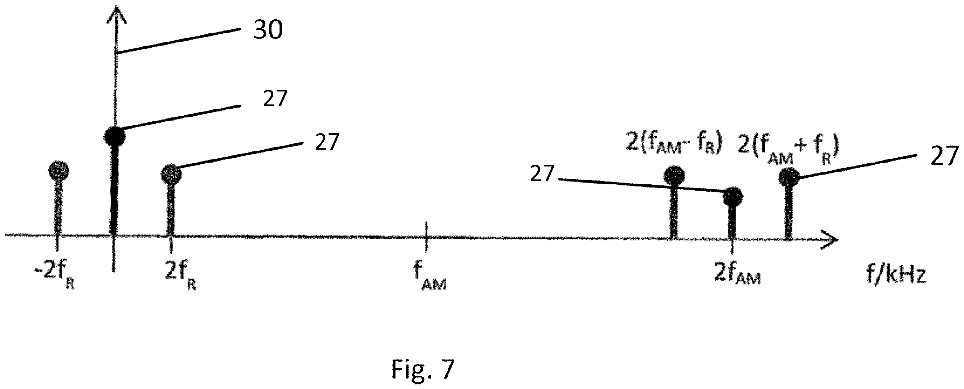

In Fig. 7 ist die Frequenzanalyse der Selbstmischung gezeigt, wobei durch die Filterung der hochfrequenten Frequenzen mittels einer einfachen Datenerfassung die entfernungsabhängige Frequenz $f_R$ bestimmt. Durch die Selbstmischung wird ein doppeltes Auflösungsvermögen erreicht, weil die Entfernungsachse um den Faktor 2 gegenüber anderen Radarverfahren gestreckt ist.

Zur Vereinfachung folgender Berechnungen wird angenommen, dass lediglich ein Transponder 14 in dem Radarsystem 10 mit der Basisstation 12 kommuniziert. Die Phasenlage des aufgemischten amplitudenmodulierten Ortungssignals 2 der Basisstation 12 ist nicht bekannt, außerdem kann es aufgrund von Bauteiltoleranzen zu Schwankungen der hochreinen Amplitudenmodulationsfrequenz kommen.

Allerdings kann aufgrund des doppelten rückgesendeten Signals 27 durch Mittelwertbildung der beiden entfernungsabhängigen Frequenzen $f_R$ und $-f_R$ die ausgesendete Frequenz berechnet werden. Ferner kann der Abstand der Basisstation 12 zum Transponder 14 und damit zum Gegenstand 15 über die Differenz der beiden entfernungsabhängigen Frequenzen $f_R$ und $-f_R$ der beiden peakartigen Signale 27 berechnet werden. Dazu kann folgende Beziehung herangezogen werden, wobei $f_{rechts}$ die Frequenz des rechten und $f_{links}$ die Frequenz des linken Peaks angibt.

$$R = \frac{c_0}{4 \cdot \Delta f / \Delta T} \cdot (f_{rechts} - f_{links})$$

Den Dopplereffekt und/oder die Phasendrehung, die aufgrund geringer Bewegungen des Gegenstands 15 entstehen können, werden durch die Messung der Phasendifferenz $\Delta\varphi(t)$ zwischen den beiden rückgesendeten Signale 27 bestimmt, wobei $\varphi_{rechts}(t)$ die Phase des rechten und $\varphi_{links}(t)$ die Phase des linken Peaks angibt.

$$\Delta\varphi(t) = \varphi_{rechts}(t) - \varphi_{links}(t)$$

Eine weitere Ausführungsform beinhaltet mehrere Transponder 14, die mit nur einer Basisstation 12 zum Einsatz kommen. Dabei amplitudenmoduliert jeder Transponder 14 mit einer eigenen Amplitudenmodulationsfrequenz $f_{AM,i}$, wobei i der Index des jeweiligen Transponders 14 mit i = 1, 2, 3...N ist. Die jeweiligen Amplitudenmodulationsfrequenzen $f_{AM,i} = \approx f_{AM}$ unterscheiden sich in ihre Phasenlage und den Frequenzen zueinander, jedoch sind sie vorzugsweise um die Frequenz $f_{AM}$ herum verteilt. Damit die Objekte sicher unterschieden werden können, müssen sich die Entfernungen R wenigstens um das ein- bis zweifache der Entfernungsauflösung $\Delta R$ unterscheiden. Erst wenn diese Bedingungen erfüllt sind, können der linke und der rechte Peak des Signals 27 der einzelnen Transponder 14 eindeutig voneinander unterschieden werden. Andernfalls vermischen sich die Peaks der Signale 27 der unterschiedlichen Transponder 14 und können somit nicht mehr den jeweiligen Transpondern 14 zugeordnet werden.

Wird nun das Ortungssignal gemäß der vierten Alternative der Signalverarbeitung zur Auswertung selbstgemischt, können die Transpondersysteme 14 mit signifikant unterschiedlichen Amplitudenmodulationsfrequenzen $f_{AM,i}$ arbeiten. Diese Amplitudenmodulationsfrequenzen $f_{AM,i}$ können das Vielfache der grundlegenden Amplitudenmodulationsfrequenzen $f_{AM}$ beinhalten. Ferner treten durch die Selbstmischung gekoppelte Multiplikationsterme zwischen den einzelnen Transpondern 14 auf, wobei sich die Multiplikationstherme der unterschiedlichen Amplitudenmodulationsfrequenzen $f_{AM,i}$ mit Vielfachen der grundlegenden Amplitudenmodulationsfrequenzen $f_{AM}$ darstellen. Daher sind sie einfach auszufiltern, sodass sich die unverkoppelten Multiplikationsterme in das niedrige Frequenzband mischen und sich dort mit den Signalen der anderen Transponder 14 überlagern. Würden alle Transponder 14 mit den gleichen Amplitudenmodulationsfrequenzen $f_{AM}$ betrieben werden, entstünden sogenannte "Geisterobjekte" die nicht reale Interferenzen darstellen.

Ferner kann die Basisstation 12 sowohl ein SISO- System mit vorzugsweise einer TX- und einer RX-Antenne oder ein bildgebendes MIMO-System sein. Die Verwendung eines entsprechenden Systems setzt voraus, dass jeweils nur eine der obigen vier Signalverarbeitungsmethoden verwendet werden kann.

Alternativ kann statt einer in Radarsystem typischen linearen Frequenzvariation in der Basisstation ein anderes Modulationsverfahren, wie Sie in gängigen Kommunikationssystemen üblich sind, zum Einsatz kommen.

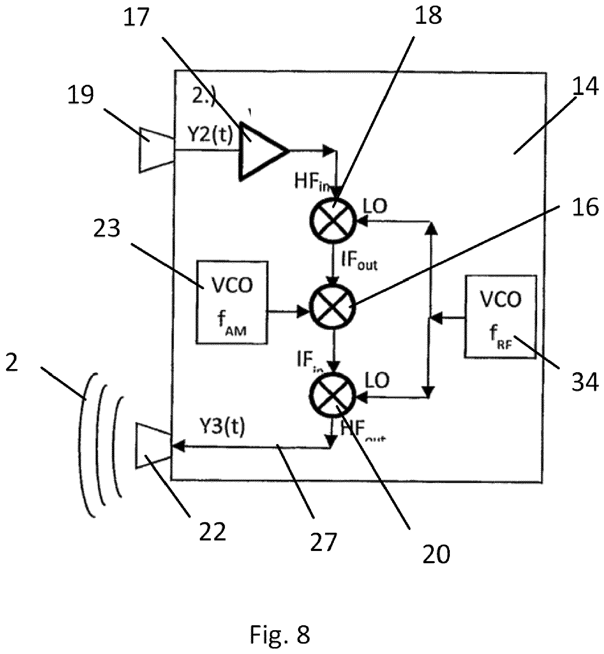

In Fig. 8 ist ein alternativer Transponder 14 dargestellt. Der Transponder 14 mischt die Wellenfunktion y2(t) nach dem Verstärken mit dem Verstärker 17 durch einen zweiten Mischer 18 mit einer Stabilisationsfrequenz $f_{RF}$, die durch eine Signalquelle 34 erzeugt wird. Nachdem Mischen im zweiten Mischer 18 wird das Signal an den ersten Mischer 16 im Transponder 14 weitergeleitet, wo die Amplitudenmodulation erfolgt. Nach der Amplitudenmodulation wird das Signal weiter an einen dritten Mischer 20 weitergeleitet, wo es wiederholt mit der Stabilisationsfrequenz $f_{RF}$ gemischt wird und als Wellenfunktion y3(t) durch den Sender 22 als Ortungssignal 2 an die Basisstation 12 gesendet wird. Die Stabilisationsfrequenz $f_{RF}$ ist im Mikrowellenbereich und hat ungefähr die gleiche Frequenz $f_{uW}$ wie das Ursignal 1.

Bezugszeichen

| | | | |
|---|---|---|---|
| 1 | Ursignal | 21 | Signalquelle |
| 2 | Ortungssignal | 22 | Sender |
| 3 | Abdeckung | 23 | Signalquelle |
| 10 | Radarsystem | 24 | erster Mischer |
| 11 | Laserstrahl | 26 | zweiter Mischer |
| 12 | Basisstation | 27 | Signal |
| 13 | Lasersender | 28 | Filter |
| 14 | Transponder | 29 | Signalquelle |
| 15 | Gegenstand | 30 | Signalstärke |
| 16 | erster Mischer | 31 | Frequenzachse |
| 17 | Verstärker | 32 | Ausgang |
| 18 | zweiter Mischer | 33 | Signal |
| 19 | Empfänger | 34 | Signalquelle |
| 20 | dritter Mischer | | |

**Patentansprüche**

1. Verfahren zum Lokalisieren eines Gegenstands (15) mittels eines Radarsystems (10) umfassend eine Basisstation (12) und einen an dem Gegenstand (15) angebrachten aktiven Transponder (14) **gekennzeichnet durch** die Schritte:

   - Senden eines periodischen Ursignals (1) mit zeitlich variabler Urfrequenz durch die Basisstation (12),
   - Empfangen des periodischen Ursignals (1) durch den Transponder (14),
   - Modulieren des Ursignals (1) in dem Transponder (14), sodass die Amplitude des Ursignals (1) mit einer festen Amplitudenmodulationsfrequenz periodisch schwingt,
   - Senden eines periodischen Ortungssignals (2) durch den Transponder (14),
   - Empfangen des Ortungssignals (2) durch die Basisstation (12), und
   - Auswerten des Ortungssignals (2) durch eine Analyse für periodische Signale, um den Gegenstand zu lokalisieren.

2. Verfahren nach Anspruch 1, **dadurch gekennzeichnet, dass** das Ursignal (1) mittels eines hochreinen Sinus oder Kosinus moduliert wird.

3. Verfahren nach Anspruch 1 oder 2, **dadurch gekennzeichnet, dass** die Urfrequenz des Ursignals (1) eine lineare zeitliche Abhängigkeit aufweist.

4. Verfahren nach einem der vorhergehenden Ansprüche, **dadurch gekennzeichnet, dass** die Modulation durch einen ersten Mischer (16) im Transponder (14) erfolgt, der das Ursignal (1) aufnimmt und mit einer hochfrequenten konstanten Amplitudenmodulationsfrequenz moduliert, um es an einen Sender (22) des Transponders (14) auszugeben.

5. Verfahren nach einem der vorhergehenden Ansprüche, **dadurch gekennzeichnet, dass** die konstante Amplitudenmodulationsfrequenz gleichzeitig oder mit einzelnen unterschiedlichen konstante Amplitudenmodulationsfrequenzen schwingt.

6. Verfahren nach Anspruch 4 oder 5, **dadurch gekennzeichnet, dass** ein zweiter Mischer (18) im Transponder dem ersten Mischer (16) vorgeschaltet ist und das Ursignal (1) aufnimmt und mit einer Stabilisationsfrequenz moduliert und ein Signal an den ersten Mischer (16) weiterleitet.

7. Verfahren nach einem der Ansprüche 4 oder 5, **dadurch gekennzeichnet, dass** ein dritter Mischer (20) des Transponders dem ersten Mischer (16) nachgeschaltet ist, der das Signal (4) von dem ersten Mischer (16) aufnimmt und mit der Stabilisationsfrequenz ein weiteres Mal moduliert, wobei der dritte Mischer (20) ein Signal an den Sender (22) des Transponders (14) ausgibt.

8. Verfahren nach einem der vorhergehenden Ansprüche, **dadurch gekennzeichnet, dass** die Stabilisationsfrequenz ungefähr der Urfrequenz des Ursignals (1) entspricht, wobei die Stabilisationsfrequenz im Mikrowellenbereich oder im Radiowellenbereich oder im Radarwellenbereich oder im Meterwellenbereich oder im Zentimeterwellenbereich liegt.

9. Verfahren nach einem der vorhergehenden Ansprüche, **dadurch gekennzeichnet, dass** durch das Auswerten des Ortungssignals die Entfernung und Geschwindigkeit des Gegenstands bestimmt wird, wobei vorzugsweise die Geschwindigkeitsrichtung bestimmt wird.

10. Verfahren nach einem der vorhergehenden Ansprüche, **dadurch gekennzeichnet, dass** in der Basisstation (12) schnellabtastende Analog-Digital-Wandler eingesetzt werden, um das Ortungssignal (2) zu analysieren.

11. Verfahren nach einem der vorhergehenden Ansprüche, **dadurch gekennzeichnet, dass** das Ortungssignal (2) in der Basisstation (12) gefiltert wird, insbesondere hochpassgefiltert oder bandpassgefiltert oder tiefpassgefiltert wird.

12. Verfahren nach einem der vorhergehenden Ansprüche, **dadurch gekennzeichnet, dass** das gefilterte Ortungssignal (2) mit langsam abtastenden Analog-Digital-Wandler analysiert wird, wodurch insbesondere die Datenrate reduziert wird.

13. Verfahren nach einem der vorhergehenden Ansprüche, **dadurch gekennzeichnet, dass** das Ortungssignal (2) mit einer Frequenz, die geringer ist als die konstanten Amplitudenmodulationsfrequenzen, in einem zweiten Mischer (26) in der Basisstation (12) gemischt wird.

14. Verfahren nach einem der Ansprüche 1 bis 11, **dadurch gekennzeichnet, dass** das Ortungssignal (2) in einem Basisbandsignal selbstgemischt wird.

15. Verfahren nach einem der vorhergehenden Ansprüche, **dadurch gekennzeichnet, dass** das Ortungssignal (2) nach dem Empfangen durch einen ersten Mischer (24) in der Basisstation (12) mit dem Ursignal (1) entsprechenden gemischt wird.

16. Transponder (14) eines Radarsystems (10) zum Ausführen eines Verfahrens insbesondere nach einem der vorhergehenden Ansprüchen umfassend einen Sender (22) und einen Empfänger (19) sowie einen Verstärker (17), **dadurch gekennzeichnet, dass** ein erster Mischer (16) in dem Transponder (14) eine Amplitudenmodulationsfrequenz mittels einer Signalquelle (23) auf ein empfangenes Ursignal (1) aufmoduliert.

17. Transponder (14) nach Anspruch 16, **dadurch gekennzeichnet, dass** ein zweiter Mischer (18) und vorzugsweise ein dritter Mischer (20) im Transponder (14) verschaltet ist, die auf das Ursignal (1) eine Stabilisationsfrequenz mittels einer weiteren Signalquelle (34) aufmodulieren.

18. Basisstation (12) eines Radarsystems (10) zum Ausführen eines Verfahrens insbesondere nach einem der vorhergehenden Ansprüchen umfassend einen Sender (22) und einen Empfänger (19) sowie eine Signalquelle (21) für ein Ursignal (1), **dadurch gekennzeichnet, dass** ein erster Mischer (24) in der Basisstation (12) ein empfangenes Ortungssignal (2) mit einer Frequenz der Signalquelle (21) mischt, und anschließend ein Filter (28) das gemischte Signal filtert.

19. Basisstation (12) nach Anspruch 18, **dadurch gekennzeichnet, dass** ein zweiter Mischer (26) in der Basisstation (12) das gefilterte Signal mit einer weiteren Frequenz mischt.

20. Radarsystem (10) umfassend eine Basisstation (12) und wenigstens einen Transponder (14) nach einem der vorherigen Ansprüche.

Fig. 1a

Fig. 1b

Fig. 1

EP 3 599 483 A1

Fig. 2

Fig. 3

Fig. 4

EP 3 599 483 A1

Fig. 5

Fig. 6

Fig. 7

EP 3 599 483 A1

Fig. 8

Europäisches
Patentamt

European
Patent Office

Office européen
des brevets

# EUROPÄISCHER RECHERCHENBERICHT

**Nummer der Anmeldung**

EP 19 18 7193

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 01/23906 A1 (SIEMENS AG [DE]; HEIDE PATRIC [DE]; VOSSIEK MARTIN [DE]) 5. April 2001 (2001-04-05) * Zusammenfassung * * Seite 7, Zeile 1 - Zeile 4 * * Seite 14, Zeile 22 - Zeile 24 * * Seite 15, Zeile 17 - Zeile 19 * * Seite 15, Zeile 29 - Zeile 30 * * Seite 18, Zeile 29 - Zeile 31 * ----- | 1-20 | INV. G01S13/82 |
| X | US 2010/231410 A1 (SEISENBERGER CLAUS [DE] ET AL) 16. September 2010 (2010-09-16) * Abbildungen 1,2A * * Zusammenfassung * ----- | 1-20 | |
| X | EP 2 407 799 A1 (SIVERS IMA AB [SE]) 18. Januar 2012 (2012-01-18) * Zusammenfassung * * Absätze [0014], [0027] * ----- | 1-20 | |
| | | | **RECHERCHIERTE SACHGEBIETE (IPC)** G01S |

Der vorliegende Recherchenbericht wurde für alle Patentansprüche erstellt

| Recherchenort | Abschlußdatum der Recherche | Prüfer |
|---|---|---|
| München | 22. November 2019 | Alberga, Vito |

EPO FORM 1503 03.82 (P04C03)

## ANHANG ZUM EUROPÄISCHEN RECHERCHENBERICHT
### ÜBER DIE EUROPÄISCHE PATENTANMELDUNG NR.

EP 19 18 7193

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

22-11-2019

| Im Recherchenbericht angeführtes Patentdokument | Datum der Veröffentlichung | Mitglied(er) der Patentfamilie | Datum der Veröffentlichung |
|---|---|---|---|
| WO 0123906 A1 | 05-04-2001 | DE 19946161 A1<br>EP 1216424 A1<br>WO 0123906 A1 | 26-04-2001<br>26-06-2002<br>05-04-2001 |
| US 2010231410 A1 | 16-09-2010 | DE 102006004023 A1<br>EP 1977268 A1<br>US 2010231410 A1<br>WO 2007085517 A1 | 09-08-2007<br>08-10-2008<br>16-09-2010<br>02-08-2007 |
| EP 2407799 A1 | 18-01-2012 | EP 2407799 A1<br>KR 20130041195 A<br>US 2013127652 A1<br>WO 2012007353 A1 | 18-01-2012<br>24-04-2013<br>23-05-2013<br>19-01-2012 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19946168 A1
- DE 10054180 B4
- DE 10261098 A1
- DE 102005059507 A1